# EUROPEAN PATENT SPECIFICATION

(11) **EP 2 472 640 B1**
(45) Date of publication and mention of the grant of the patent: **18.06.2014**
(21) Application number: 11195947.4
(22) Date of filing: 28.12.2011
(51) Int. Cl.: H01M 2/22, H01M 2/26

(54) **Secondary battery**
Sekundärbatterie
Batterie secondaire

(30) Priority: 29.12.2010 US 201061428218 P; 15.06.2011 US 201113161437
(43) Date of publication of application: 04.07.2012
(73) Proprietor: Samsung SDI Co., Ltd., Gyeonggi-do (KR)
(72) Inventor: Kim, Jongpil, Gyeonggi-do (KR); Kim, Daegeun, Gyeonggi-do (KR); Lim, Sungil, Gyeonggi-do (KR)
(74) Representative: Mounteney, Simon James

(56) References cited:
- GB-A- 2 406 209
- US-A1- 2008 292 950

## Description

The present invention relates to a secondary battery.

### BACKGROUND ART

A secondary battery generally includes an external terminal for electrical connection with an external device. The external terminal is electrically connected with a protective circuit module (PCM) of the battery that is electrically connected with a bare cell of the battery. An electrical connection between the external terminal and the PCM is typically performed by manually soldering the external terminal on a protective circuit board (PCB) of the PCM.

GB 2 406 209 discloses a secondary battery in which an insulating block is formed from a high melting point plastic which is not deformed at a soldering temperature of an electronic component.

The present invention sets out to provide a secondary battery having improved quality, that can be manufactured in a simplified manner by automating a soldering process required to electrically connect an external terminal of the battery with a PCM.

At least one of the above and other features and advantages may be realized by providing a secondary battery as set out in claim 1.

Preferred features of the invention are set out in claims 2 to 12.

Thus an embodiment of the present invention enables a soldering process for electrically connecting an external tenninal with a PCM to be automated. Consequently a cleaning process for removing soldering balls can be omitted, thereby simplifying the fabrication process and saving costs and materials.

Furthermore, an automated soldering process according to the invention can prevent the bare cell and the PCM from being electrically shorted due to a difference between solder heights and it can also reduce a deviation in the performance between processing workers.

### BRIEF DESCRIPTION OF THE DRAWINGS

Hereinafter, embodiments of the present invention will be described in detail with reference to the accompanying drawings in which:
FIG. 1 is an exploded perspective view of a secondary battery according to an embodiment of the present invention;
FIG. 2 is a sectional view illustrating the casing and PCM of the secondary battery of FIG. 1 taken along the line X-X' of FIG. 1; and
FIG. 3 is a sectional view corresponding to FIG. 2, but showing an alternative embodiment of the present invention.

### DETAILED DESCRIPTION

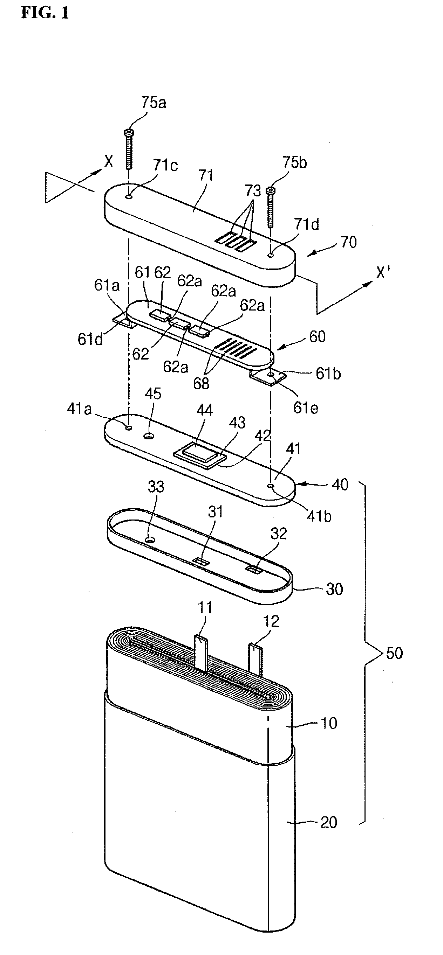

Referring to FIG. 1, the secondary battery according to the illustrated embodiment of the present invention includes a bare cell 50, a PCM 60 formed on the bare cell 50 and electrically connected to the bare cell 50, and a casing 70 fixed to the bare cell 50 while covering the PCM 60. Here, the bare cell 50 includes an electrode assembly 10, a can 20 housing the electrode assembly 10 therein, an insulation case 30 inserted into the can 20 through an upper opening of the can 20, and a cap assembly 40 formed on the insulation case 30 and electrically connected to the electrode assembly 10.

The electrode assembly 10 includes a negative electrode plate (not shown), a positive electrode plate (not shown), and a separator (not shown). The negative electrode plate and the positive electrode plate are stacked with the separator interposed therebetween, and are wound in a jelly-roll configuration. A negative electrode tab 11 is welded to the negative electrode plate, and one end of the negative electrode tab 11 I protrudes toward an upper portion of the electrode assembly 10. In addition, a positive electrode tab 12 is welded to the positive electrode plate and one end of the positive electrode tab 12 protrudes toward an upper portion of the electrode assembly 10. It would be appreciated by those skilled in the art that polarities of the negative electrode tab 11 and the positive electrode tab 12 may be reversed.

The can 20 may be formed of a metal member having a substantially cuboidal shape. In addition, the can 20 has an open top, forming a top opening, and the electrode assembly 10 is received through the top opening. In some cases, the can 20 may be used as an electrode terminal. The can 20 may serve as an electrode terminal and generally have a polarity opposite to that of an electrode terminal 44 to be described later. As described above, since the polarities of the negative electrode tab 11 and the positive electrode tab 12 may be reversed, the electrode terminal 44 may be either a negative electrode terminal or a positive electrode terminal. In addition, when the electrode terminal 44 is a positive electrode terminal, the polarity of the can 20 may be negative, and when the electrode terminal 44 is a negative electrode terminal, the polarity of the can 20 may be positive. The detailed description of the present invention will be made based on the assumption that the polarity of the can 20 is positive and the electrode terminal 44 is negative electrode terminal.

The insulation case 30 includes a negative electrode tab hole 31 at a location corresponding to that of the negative electrode tab 11 to have a size and a shape corresponding to those of the negative electrode tab 11, and a positive electrode tab hole 32 at a location corresponding to that of the positive electrode tab 12 to have a size and a shape corresponding to those of the positive electrode tab 12. In addition, the insulation case 30 includes an electrolyte hole 33 formed at one side to allow an electrolytic solution to pass.

The insulation case 30 is shaped to correspond to the top opening of the can 20 and is inserted into the top opening to then be coupled to the can 20. In addition, the insulation case 30 insulates the electrode assembly 10 from the cap assembly 40. Thus, the insulation case 30 is made of an electrically insulating material.

The cap assembly 40 includes a cap plate 41, an electrode terminal 44 inserted into the electrode terminal hole 42 extending through the center of the cap plate 41, and an insulation gasket 43 interposed between the electrode terminal hole 42 and the electrode terminal 44. The cap plate 41 includes a first thread groove 41a and a second thread groove 41 b formed lengthwise at one and the other sides of the cap plate 41. In addition, the cap plate 41 includes an electrolyte injection hole 45 at a location corresponding to that of the electrolyte hole 33 to have a size and a shape corresponding to those of the electrolyte hole 33.

The cap plate 41 may be formed of a metal plate shaped to correspond to the top opening of the can 20 and having a size and a shape corresponding to those of those of the insulation case 30. The positive electrode tab 12 is coupled to the bottom surface of the cap plate 41 by welding, thereby allowing the positive electrode of the electrode assembly 10 and the cap plate 41 to be electrically connected. In addition, the cap plate 41 serves to seal the top opening of the can 20.

The negative electrode tab 11 is coupled to the bottom surface of the electrode terminal 44 by welding, thereby allowing the negative electrode of the electrode assembly 10 and the electrode terminal 44 to be electrically connected.

As described above, the insulation gasket 43 is interposed between the electrode terminal hole 42 and the electrode terminal 44, thereby electrically insulating the cap plate 41 and the electrode terminal 44 from each other.

Configurations of the PCM 60 and the casing 70 of the secondary battery according to the illustrated embodiment, and a structure in which the PCM 60 and the casing 70 are coupled to each other, will now be described.

The PCM 60 includes a PCB 61, first and second lead plates 61a and 61b attached to ends of one and the other sides of the bottom surface of the PCB 61, and a terminal plate 61c attached to the center of the bottom surface of the PCB 61. The PCM 60 includes a first protective circuit device 62. In addition, an opening 68, into which an external terminal 73 is inserted, is formed at the other side of the PCB 61. The external terminal 73 is electrically connected to the PCB 61 via welding leads 73a, which extend through the opening 68, and are soldered to the PCB 61 using first solder 73b. The first protective circuit device is coupled to the PCB 61 using a second solder 62a.

A conductive wire pattern (not shown) is mounted on the PCB 61, so that components, such as protective circuit devices or lead plates, which are attached to the top or bottom surface of the PCB 61, may be electrically connected.

The first lead plate 61a includes a first thread hole 61d at a location corresponding to that of the first thread groove 41 a to have a size and a shape corresponding to those of the first thread groove 41a.

The first lead plate 61 a is coupled to a first support 71a formed in the casing 70 and the top surface of the cap plate 41, thereby allowing the PCM 60 to be coupled to the casing 70 and the bare cell 50.

The second lead plate 61b includes a second thread hole 61e at a location corresponding to that of the second thread groove 41 b to have a size and a shape corresponding to those of the second thread groove 41b. The second lead plate 61 b is coupled to a second support 71b formed in the casing 70 and the top surface of the cap plate 41, thereby allowing the PCM 60 to be coupled to the casing 70 and the bare cell 50. In addition, the second lead plate 61 b is electrically connected to the conductive wire pattern (not shown).

The terminal plate 61 c is electrically connected to the conductive wire pattern. In addition, the terminal plate 61c is coupled to the electrode terminal 44 when the PCM 60 is combined with the bare cell 50, thereby electrically connecting the negative electrode of the electrode assembly 20 to the PCM 60.

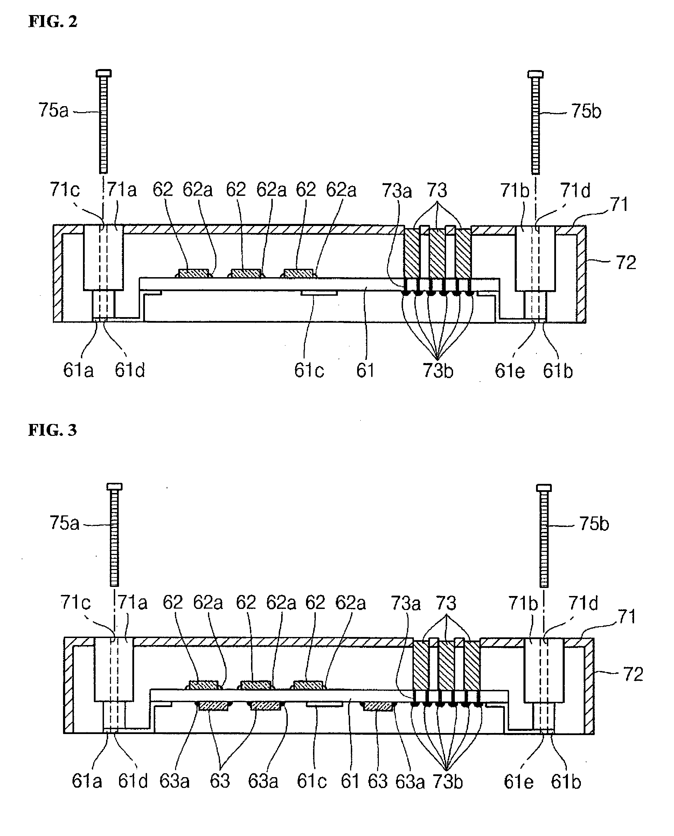

The protective circuit device 62 is electrically connected to the conductive wire pattern and controls charge/discharge operations, thereby protecting the secondary battery. Although FIG. 2 shows that as a result of coupling, the PCM 60, that is, three first protective circuit devices 62, mounted on a top surface of the PCB 61, is coupled to the casing 70, the present invention does not limit the number of the first protective circuit devices 62 thereto.

The second solder 62a is made of an alloy of tin (Sn), silver (Ag) and copper (Cu). A composition of the alloy preferably includes about 96.5% of Sn, about 3.0% of Ag, and about 0.5% of Cu. In this case, since the melting point of the second solder 62a is about 220°C, soldering is performed at about 220 °C or higher. The soldering operation may be either flow soldering or reflow soldering. However, if the operation uses reflow soldering, the reflow conditions may include a peak temperature of between about 250°C and about 255°C and a peak time of about 30 to 70 seconds.

The flow soldering is performed such that solder is melted and placed in a solder-pot, the solder is waved, and the waved solder is allowed to pass through a PCB (PCB) having components mounted thereon by transferring the PCB through a conveyor. The reflow soldering, commonly called surface mount technology (SMT) as well, is performed such that cream solder is printed on a PCB, components are attached to the PCB, and the PCB having the components is allowed to pass through a reflow soldering machine. In this case, the reflow soldering machine performs soldering by melting cream solder.

The casing 70 includes a lid 71 covering the PCM 60 and the cap assembly 40, and a sidewall 72 extending from a top surface 71 of the casing toward the can 20. In addition, a first support 71 a and a second support 71b are formed at one and the other sides of the lid 71 toward the can 20. The first support 71 a includes a third thread hole 71c at a location corresponding to that of the first thread hole 61d to have a size and a shape corresponding to those of the first thread hole 61d. In addition, the second support 71b includes a fourth thread hole 71d at a location corresponding to that of the second thread hole 61e to have a size and a shape corresponding to those of the second thread hole 61e. In addition, the lid 71 includes an external terminal 73 at a location corresponding to that of the opening 68 formed in the PCB 61, and a welding lead 73a is formed on a bottom surface of the external terminal 73.

The casing 70 is shaped and sized to correspond to openings of the cap plate 41 1 and the can 20. The casing 70 is made of a resin reinforced by glass fiber added in the range of 50% to 60%. In this case, a softening point (i.e., a temperature at which a solid material starts to deform by being heated) of the casing 70 is 170°C or higher.

The resin can be formed of various kinds of thermo softening polymers. Examples of such materials are PA(polyamide), PP(polyprophylene), PE(polyethylene), PS(polystyrene).

These materials will soften or deform at a softening point.

If the resin includes less than 50% of glass fiber, the softening point is so low that the casing 70 may deform while soldering, specifically second soldering, is performed on the welding lead 73a. However, if the resin includes greater than 60% of glass fiber, the casing 70 may not be easily formed.

In the above stated range of glass fiber, a mold shrinkage (in perpendicular direction) of the casing 70 is in a range of between about 0.5 and about 1, preferably about 0.7.

The first support 71a is combined with the first lead plate 61a constituting the PCM 60 by a first thread 75a, thereby fixing the PCM 60 to the casing 70. The second support 71b is combined with the second lead plate 61b constituting the PCM 60 by a second thread 75b, thereby fixing the PCM 60 to the casing 70.

The external terminal 73 is electrically connected to the PCB 61 such that the welding lead 73a formed on the bottom surface of the external terminal 73 is inserted into an opening 68 extending through the PCB 61, to then be subjected to soldering, specifically using the first solder 73b coated on the bottom surface of the PCB 61.

The first solder 73b and the second solder 62a may be made of different materials. The first solder 73b is made of an alloy of Sn and Bi(bismuth). When alloyed with other metals, Bi melts at a temperature lower than its own melting point, i.e., 271°C .

The alloy of the first solder 73b comprises Bi of about 45% or greater, preferably about 58%. In this case, a melting point of the first solder 73b is about 138°C. Therefore, the soldering using the first solder 73b is performed at about 138°C or higher.

To avoid damage to the casing 70, the first solder 73b should be used at a temperature lower than the softening point of the casing 70 and the melting point of the second solder 62a. Therefore, it should be used at a temperature lower than 170°C. That is to say, the first solder 73b should be used, in this embodiment, at a temperature that is higher than 138°C and lower than 170°C, preferably at a temperature in a range of about 150°C to about 160°C

Reflow soldering is preferably used to apply the first solder 73b. After components are mounted on a top surface of the PCB 61, cream solder is coated on a bottom surface of the PCB 61 to then be combined with the casing 70, followed by passing through a reflow machine, thereby achieving processing automation. If reflow soldering is used, the reflow conditions may include a peak temperature of between about 150°C and about 165°C and a peak time of about 30 to 100 seconds. That is to say, even if the process is based on reflow soldering, the melting point of the second solder 62a is higher than a temperature at which the first solder is used. Thus, there is no melting problem of the second solder 62a, during melting of the first solder 73b.

As described above, after the PCM 60 is combined with the casing 70, the first lead plate 61 a and the second lead plate 61 b are coupled to the cap plate 41, respectively, thereby combining the PCM 60 with the bare cell 50. In this case, the combining between the PCM 60 and the bare cell 50 is achieved by tightening the first thread 75a and the second thread 75b with the first thread groove 41a and the second thread groove 41 b provided on the cap plate 41.

In such a manner, the secondary battery according to the illustrated embodiment of the present invention is completed by first combining the PCM 60 with the casing 70 and then combining the casing 70 with the bare cell 50. In addition, the secondary battery according to the illustrated embodiment of the present invention is manufactured such that a temperature at which the first solder is used is lower than that at which the second solder is used. Accordingly, the operation of combining the PCM 60 with the casing 70 is achieved through one cycle of reflow processing, thereby increasing the manufacturing efficiency.

Next, a secondary battery according to another embodiment of the present invention will be described.

FIG. 3 is a sectional view illustrating that a casing of a secondary battery according to another embodiment of the present invention and a PCM are coupled to each other.

Referring to FIG. 3, the secondary battery according to the illustrated embodiment of the present invention is substantially the same as the secondary battery according to the previous embodiment in view of configuration and operation, except that a second protective circuit device 63 and a third solder 63a are further formed on the bottom surface of a PCB 61. Thus, the following description will focus on only differences between the secondary batteries according to the illustrated embodiment and the previous embodiment of the present invention, and repetitive descriptions will not be given.

A second protective circuit device 63 formed on a bottom surface of the PCB 61 is subjected to soldering using a third solder 63a coated on the bottom surface of the PCB 61, thereby combining the second protective circuit device 63 with the bottom surface of the PCB 61. While FIG. 3 illustrates that each three protective circuit devices are mounted on top and bottom surfaces of the PCB 61, which is provided only by way of example, the invention does not limit the number of protective circuit devices to the illustrated example.

The third solder 63a and the second solder 62a may be made of different materials. The third solder 63a and the first solder 73b are preferably made of the same material. That is to say, the third solder 63a is preferably made of an alloy of Sn and Bi. Therefore, the alloy of the third solder 63a comprises Bi of about 45% or higher, preferably about 58%.

In this case, a melting point of the third solder 63a is about 138°C. Therefore, the process for melting the third solder 63a is performed at about 138°C or higher.

In addition, the third solder should be applied at a temperature lower than the softening point of the casing 70 and the melting point of the second solder 62a. Therefore, the third solder should be used at a temperature lower than 170°C. That is to say, the temperature for melting the third solder is higher than 138°C and lower than 170°C, preferably at a temperature in a range of about 150°C to about 160°C.

Meanwhile, the third solder is preferably applied using reflow soldering. Cream solder is coated on a bottom surface of the PCB 61, components are mounted on a botto m surface of the PCB 61, and the PCB 61 is then combined with the casing 70. In such a state, the resultant structure is allowed to pass through a reflow machine at once, thereb y achieving processing automation. Thus, the first solder and the third solder are prefera bly applied at the same time. That is to say, even if the third solder is applied using reflo w soldering, the melting point of the second solder 62a is higher than a temperature at w hich the third solder is performed. Thus, there is no melting problem of the second solde r 62a, for example.

The embodiment shown in Fig. 3 is conceived for mounting the components ad ditionally on the bottom surface of PCB 61 after mounting the components on the top su rface of the PCB 61 using the second solder. However, after all the components are mo unted on the bottom surface of the PCB 61 without mounting the component to the top s urface of the PCB 61, the welding lead 73a formed on the bottom surface of the external terminal 73 may be connected to the PCB 61 and an assembly of the PCB 61 and casing 70 may be then passed through a reflow machine at a time to assemble the components and couple the terminals to each other.

A method of manufacturing a secondary battery according to an embodiment of the present invention will now be described.

The method includes (S1) mounting a first protective circuit device 62, (S2) performing first soldering, (S3) combining a PCB 61 and a casing 70, (S4) performing second soldering, (S5) coupling the casing 70 to a bare cell 50.

In step S1, a second solder 62a is coated on a position of a top surface of the PCB (PCB) 61, where the first protective circuit device 62 is to be mounted, and the first protective circuit device 62 is inserted into the to-be-mounted position.

In step S2, the first soldering is performed using the second solder 62a, thereby fixing the first protective circuit device 62 on the top surface of the PCB 61 and electrically connecting the first protective circuit device 62 and the PCB 61 to each other.

In step S3, a first solder 73b is coated on a portion of a bottom surface of the PCB 61, where an opening 68 is formed, and a welding lead 73a formed on a bottom surface of an external terminal 73 of the casing 70 is inserted into the opening 68. As described above, the first solder 73b preferably has a melting point lower than that of the second solder 62a.

In step S4, the second soldering is performed using the third solder 73b to fix the external terminal 73 to the PCB 61 through the welding lead 73a. In addition, as the result of performing the second soldering (i.e., step S5), the external terminal 73 and the PCB 61 are electrically connected to each other. Here, a temperature for performing the second soldering is preferably lower than that for performing the first soldering, and the second soldering is preferably based on reflow soldering.

In step S5, the casing 70 combined with the PCB 61 is coupled to the cap plate 41 forming the bare cell 50. Here, the coupling is achieved by screw tightening using a first screw 75a and a second screw 75b.

Next, a method of manufacturing a secondary battery according to another embodiment of the present invention will be described. The manufacturing method of the secondary battery according to the illustrated embodiment of the present invention is substantially the same as the manufacturing method of the secondary battery according to the previous embodiment, except that it further includes (521) mounting a second protective circuit device 63. Thus repetitive descriptions thereof will not be given.

Step S21 is performed between step S2 and S3. In S1, the third solder 63a is coated on a position where the second protective circuit device 63 is to be mounted, and the second protective circuit device 63 is then inserted into the to-be-mounted position. As described above, a melting point of the third solder 63a is preferably lower than that of the second solder 62a. In addition, the third solder 63a is preferably soldered at the same time when performing second soldering using the first solder 73b.

Although the above embodiments employ the use of the second (and third) solder to connect the protective circuit devices to the PCB 61, these components could be omitted or connected in another way. As a consequence, a battery according to the invention may employ only the first solder.

In alternative embodiments, the first protective circuit devices 62 could be omitted and only the second protective circuit devices 63 be present. In such a case the third solder 63a would be employed, but not the second solder 62a

As described above, a secondary battery according to the present invention can effectively simplify the fabrication process and save processing effort by automating the soldering process for electrically connecting the external terminal with the PCM, by which the cleaning process for removing soldering balls can be omitted.

Also, in a secondary battery according to the present invention, the automated soldering process can prevent the bare cell and the PCM from being electrically shorted due to a difference between solder heights and can reduce a deviation in the performance between processing workers.

While this invention has been particularly shown and described with reference to preferred embodiments thereof, it will be understood by those skilled in the art that various changes in form and details may be made therein without departing from the scope of the invention.

## Claims

1. A secondary battery comprising:
a bare cell (50);
a protective circuit module (PCM) (60) coupled to the bare cell (50), the PCM comprising a first protective circuit device (62) on a first surface thereof;
a casing (70) in which the PCM (60) is received, the said casing (70) comprising a casing material; and
an external terminal (73) for forming an electrical connection between the secondary battery and a device;
wherein the external terminal (73) is electrically connected to the PCM (60) using a first solder (73b) having a melting point that is lower than a first temperature at which the casing material has an increased susceptibility to deformation or degradation; **characterized in that**
the first protective circuit device (62) is electrically connected to a part of the PCM (60) using a second solder (62a) that has a melting point higher than that of the first solder (73b).

2. A secondary battery according to Claim 1, wherein the casing material comprises a thermosoftening plastics material and the first temperature is a softening temperature.

3. A secondary battery according to Claim 1 or 2, wherein the first and second solders (73b, 62a) have different compositions.

4. A secondary battery according to any preceding claim, wherein the casing material comprises a resin filled with glass fibre in the range of 50 to 60 wt%.

5. A secondary battery according to Claim 4, wherein the softening point of the casing material is 170°C or higher.

6. A secondary battery according to any preceding claim, wherein the first solder (73b) comprises at least 45 wt% Bi.

7. A secondary battery according to any preceding claim, wherein the first solder (73b) has a melting point of less than 170 °C.

8. A secondary battery according to Claim 7, wherein the first solder (73b) has a melting point of from 150 °C to 160 °C.

9. A secondary battery according to any preceding claim, wherein the second solder (62a) has a melting point of 220 °C.

10. A secondary battery according to any preceding claim, wherein the PCM (60) comprises a second protective circuit device (63) on a second surface thereof and the second protective circuit device (63) is electrically connected to a part of the PCM (60) using a third solder (63a).

11. A secondary battery according to Claim 10, wherein the first solder (73b) and the third solder (63a) are made from the same material.

12. A secondary battery according to any preceding claim, wherein the external terminal (73) is connected to the first solder (73b) via an opening (68) in the PCM (60).

## Patentansprüche

1. Sekundärbatterie, umfassend:
eine unverkleidete Zelle (50);
ein Schutzschaltungsmodul (PCM) (60), das mit der unverkleideten Zelle (50) gekoppelt ist, wobei das PCM ein erstes Schutzschaltungsbauelement (62) auf einer ersten Oberfläche desselben umfasst;
ein Gehäuse (70), in dem das PCM (60) aufgenommen wird, wobei das Gehäuse (70) ein Gehäusematerial umfasst; und
einen äußeren Anschluss (73) zum Ausbilden einer elektrischen Verbindung zwischen der Sekundärbatterie und einem Gerät;
worin der äußere Anschluss (73) mit dem PCM (60) elektrisch verbunden ist, und zwar unter Verwendung eines ersten Lots (73b), das einen Schmelzpunkt hat, der niedriger als eine erste Temperatur ist, bei der das Gehäusematerial eine erhöhte Empfänglichkeit fiir Verformung oder Zersetzung hat; **dadurch gekennzeichnet, dass**
das erste Schutzschaltungsbauelement (62) mit einem Teil des PCM (60) elektrisch verbunden ist, und zwar unter Verwendung eines zweiten Lots (62a), das einen Schmelzpunkt hat, der höher als der des ersten Lots (73b) ist.

2. Sekundärbatterie nach Anspruch 1, worin das Gehäusematerial ein bei Wärme erweichendes Kunststoffmaterial ist und die erste Temperatur eine Erweichungstemperatur ist.

3. Sekundärbatterie nach Anspruch 1 oder 2, worin die ersten und zweiten Lote (73b, 62a) unterschiedliche Zusammensetzungen haben.

4. Sekundärbatterie nach einem der vorhergehenden Ansprüche, worin das Gehäusematerial ein Kunstharz ist, das mit Glasfaser im Bereich von 50 bis 60 Masseprozent verstärkt ist.

5. Sekundärbatterie nach Anspruch 4, worin der Erweichungspunkt des Gehäusematerials 170 °C oder höher ist.

6. Sekundärbatterie nach einem der vorhergehenden Ansprüche, worin das erste Lot (73b) mindestens 45 Masseprozent Bi umfasst.

7. Sekundärbatterie nach einem der vorhergehenden Ansprüche, worin das erste Lot (73b) einen Schmelzpunkt von weniger als 170 °C hat.

8. Sekundärbatterie nach Anspruch 7, worin das erste Lot (73b) einen Schmelzpunkt von 150 °C bis 160 °C hat.

9. Sekundärbatterie nach einem der vorhergehenden Ansprüche, worin das zweite Lot (62a) einen Schmelzpunkt von 220 °C hat.

10. Sekundärbatterie nach einem der vorhergehenden Ansprüche, worin das PCM (60) ein zweites Schutzschaltungsbauelement (63) auf einer zweiten Oberfläche desselben umfasst und das zweite Schutzschaltungsbauelement (63) unter Verwendung eines dritten Lots (63a) mit einem Teil des PCM (60) elektrisch verbunden ist.

11. Sekundärbatterie nach Anspruch 10, worin das erste Lot (73b) und das dritte Lot (63a) aus dem gleichen Material hergestellt sind.

12. Sekundärbatterie nach einem der vorhergehenden Ansprüche, worin der äußere Anschluss (73) über eine Öffnung (68) im PCM (60) mit dem ersten Lot (73b) verbunden ist.

## Revendications

1. Batterie secondaire comprenant :
une pile nue (50) ;
un module de circuit de protection (PCM) (60) couplé à la pile nue (50), le PCM comprenant un premier dispositif de circuit de protection (62) sur une première surface de celui-ci ;
un boîtier (70) dans lequel le PCM (60) est accueilli, ledit boîtier (70) comprenant un matériau de boîtier ; et
une borne externe (73) pour former une connexion électrique entre la batterie secondaire et un dispositif ;
dans laquelle la borne externe (73) est connectée électriquement au PCM (60) au moyen d'une première soudure (73b) ayant un point de fusion inférieur à une première température à laquelle le matériau de boîtier présente une susceptibilité accrue de déformation ou de dégradation ; **caractérisée en ce que**
le premier dispositif formant circuit de protection (62) est connecté électriquement à une partie du PCM (60) au moyen d'une seconde soudure (62a) qui a un point de fusion supérieur à celui de la première soudure (73b).

2. Batterie secondaire selon la revendication 1, dans laquelle le matériau de boîtier comprend une matière plastique ramollissant sous l'effet de la chaleur et la première température est une température de ramollissement.

3. Batterie secondaire selon la revendication 1 ou 2, dans laquelle les première et seconde soudures (73b, 62a) ont des compositions différentes.

4. Batterie secondaire selon l'une quelconque des revendications précédentes, dans laquelle le matériau de boîtier comprend une résine chargée avec de la fibre de verre dans la plage de 50 à 60 % en poids.

5. Batterie secondaire selon la revendication 4, dans laquelle le point de ramollissement du matériau de boîtier est supérieur ou égal à 170°C.

6. Batterie secondaire selon l'une quelconque des revendications précédentes, dans laquelle la première soudure (73b) comprend au moins 45 % en poids de Bi.

7. Batterie secondaire selon l'une quelconque des revendications précédentes, dans laquelle la première soudure (73b) a un point de fusion inférieur à 170°c.

8. Batterie secondaire selon la revendication 7, dans laquelle la première soudure (73b) a un point de fusion dans la plage de 150°C à 160°C.

9. Batterie secondaire selon l'une quelconque des revendications précédentes, dans laquelle la seconde soudure (62a) a un point de fusion de 220°C.

10. Batterie secondaire selon l'une quelconque des revendications précédentes, dans laquelle le PCM (60) comprend un second dispositif formant circuit de protection (63) sur une seconde surface de celui-ci et le second dispositif formant circuit de protection (63) est connecté électriquement à une partie du PCM (60) au moyen d'une troisième soudure (63a).

11. Batterie secondaire selon la revendication 10, dans laquelle la première soudure (73b) et la troisième soudure (63a) sont réalisées à partir du même matériau.

12. Batterie secondaire selon l'une quelconque des revendications précédentes, dans laquelle la borne externe (73) est connectée à la première soudure (73b) par l'intermédiaire d'une ouverture (68) dans le PCM (60).
